(19)

Europäisches
Patentamt
European
Patent Office
Office européen
des brevets

(11)  **EP 1 993 159 A1**

(12)  **EUROPEAN PATENT APPLICATION**

(43) Date of publication:
**19.11.2008  Bulletin 2008/47**

(21) Application number: **07108177.2**

(22) Date of filing: **14.05.2007**

(51) Int Cl.:
*H01M 8/04* (2006.01)          *H01M 8/06* (2006.01)
*H01M 8/08* (2006.01)          *H01M 8/22* (2006.01)
*H01M 8/10* (2006.01)

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(71) Applicants:
 • **ARKEMA FRANCE
   92700 Colombes (FR)**
 • **University of Yamanashi
   Yamanashi 400-8510 (JP)**

(72) Inventors:
 • **Watanabe, Masahiro
   Yamanashi, 400-0001 (JP)**
 • **Uchida, Hiroyuki
   Yamanashi, 400-0013 (JP)**
 • **Baranton, Steve
   Yamanashi, 400-006 (JP)**
 • **Dubois, Jean-Luc
   69390 Millery (FR)**

(54)  **Fuel cells using an oxy-carbon fuel soluble in aqueous meduim**

(57)    The invention is directed to a Fuel cell comprising a leak-tight container containing an anode (1) and a cathode (2) separated by an electrolytic membrane (3), in contact with an electrolysable liquid medium introduced by line (5), current collectors (9) connected, respectively, on the one hand to the anode and to the cathode, and on the other hand to an electrical circuit (4), using as liquid medium an aqueous medium containing a fuel that is at least partially soluble in the aqueous medium, at the temperature of use of the cell, comprising in addition a Hydrolyser (10) containing an acidic catalyst being able to hydrolyse the aqueous medium is implemented between the fuel cartridge and the anode, said Hydrolyser being either inside the actual fuel cell as layer or implemented on line (5) outside near its calendars as a reactor.

EP 1 993 159 A1

**Description**

Field of the invention:

Fuel Cells are devices for converting the energy of a chemical reaction into electricity. Unlike batteries, the fuel and the oxidant are stored outside the cell. The Fuel Cell can thus produce energy as long as both fuel and oxidant are supplied. The Fuel Cell produces an electromotive force by placing them in contact with two catalytic electrodes separated by or in contact with an electrolyte, which is usually in the form of proton-conductive solid polymer (PEM) or $O^{-2}$-conductive solid oxide (SOE) which also acts as a barrier to the passage of both fuel and oxidant. Considering the cell using the PEM, the fuel is placed in contact with the anode, where it is dissociated to form ions $H^+$ and electrons e- at surface of catalyst such as platinum particles supported in the anode. The electrons pass into the conductive structure of the electrode (anode) and then circulate in the external electrical circuit of the system into the cathode. The ions pass through the electrolyte to the cathode. This cathode is fed with an oxidizing agent, which is electrochemically reduced with the charged ions and electrons. Connection of the two electrodes via the external electrical circuit produces the electrical energy.

Prior art:

The majority of the studies on Fuel Cells are related to the use of hydrogen as fuel. However, the intricate problems associated with the storage of hydrogen have led to the search for solutions involving liquid fuels, which are possibly less efficient but easier to be handled.

Thus, studies have turned towards methanol, which is one of the rare reagents with hydrogen whose oxidation characteristics are sufficiently advantageous for it to be able to be used in Fuel Cells operating at low and moderate temperature.

This is how direct methanol Fuel Cells (DMFC) came into being, and which are a separate entity from the array of Fuel Cells known at the present time using hydrogen, such as PEMFC (proton exchange membrane fuel cell), MCFC (molten carbonate fuel cell) or PAFC (phosphoric acid fuel cell). It should be noted that the Fuel Cell known as SOFC (solid oxide fuel cell) is capable of functioning with liquid fuels.

The direct methanol Fuel Cell is a source of energy for many applications in which a transportable, high-autonomy energy source is required, for example for laptop computers, telephones, portable tools, etc.

These direct fuel cells work according to two modes: acid and alkaline mode. The acid mode is the most common, and the reaction mechanism is as follows:

at the anode: $CH_3OH + H_2O \rightarrow CO_2 + 6H^+ + 6e^-$,
and at the cathode: $6e^- + 6 H^+ + 3/2 O_2 \rightarrow 3 H_2O$, i.e. the overall balance is

$$CH_3OH + 3/2 O_2 \rightarrow CO_2 + 2 H_2O$$

In the alkaline mode of alkaline cells, the reaction mechanism is as follows:

at the anode: $CH_3OH + 6 OH^- \rightarrow CO_2 + H_2O + 6e^-$
and at the cathode: $6e^- + 3 H_2O + 3/2 O_2 \rightarrow 6 OH^-$,
i.e. the same overall balance.

On the other hand, indirect fuel cells usually use the steam reforming technology for producing a hydrogen rich gas from fuels, one of which is methanol. The reaction for methanol is:

$$CH_3OH + H_2O \rightarrow CO_2 + 3H_2$$

and is conducted within a catalytic reactor located between the fuel cartridge and the anode, at a temperature of about 250 °C to 300 °C, hydrogen so produced is the fuel introduced into the anodic zone of the Fuel Cell.

However, methanol has major drawbacks for bulk use, due to its toxicity, but also on account of technological limitations with existing cells.

The term "toxic product" means a product that results from inhalation, ingestion or skin penetration in small amount to the death or to acute or chronic impairment of the health of an individual.

A technological limitation that will especially be mentioned is the problem of "crossover", in which passage of methanol directly from the anode part to the cathode part, via the membrane, is observed in the cell. This phenomenon associated with the permeability of the membrane to methanol is directly associated with the currently available membrane techniques, and appears to be difficult to limit with methanol. This entails a pronounced drop in fuel, since fuel crosses the membrane without supplying electrons to be burnt in the cathode compartment, without taking into account the dysfunctions associated with this spurious reaction. Moreover, the physical characteristics of methanol such as a high vapour pressure leads to limiting the conditions of use of the cell.

Studies have thus been conducted to attempt to find substitutes for methanol and, in this respect, several European or other projects are underway, for developing a cell that functions, for example, on ethanol or dimethyl ether. Mention may be made in this respect of the article by C. Lamy and E.M. Belgsir entitled "Other direct-alcohol fuel cells" in the Handbook of Fuel Cells - Fundamentals, Technologies and Applications, - vol. 1 pages 323-334 ; 2003 John Wiley & Sons Ltd, which reviews the alternative solutions to methanol.

Among these studies, attention may be drawn to those of Y. Tsutsumi et al., given in Electrochemistry, 70(12) (2002) 984, who compared several potential methanol substitutes: dimethyl ether (DME), methylal (DMM for dimethoxymethane) and trimethoxymethane (TMM). They concluded their study by showing that the performance of direct DMM or TMM Fuel Cells is virtually equivalent to that using methanol. However, according to their study, a large amount of methanol is generated in the course of the reaction at the anode with the DMM and TMM cells. DME is not a good product from the point of view of the performance of the cell, but might in practice be the best considering the toxicity factor of the degradation products at the anode. It is also worth noting the article by Jens T. Müller et al. entitled "Electro-oxidation of Dimethyl Ether in a Polymer-Electrolyte-Membrane Fuel Cell" in the Journal of The Electrochemical Society; 147 (11) 4058-4060 (2000), which mentions the problems of "fuel crossover".

US Patent 6 054 228 also mentions, along with methanol, the possibility of using DMM and TMM as an alternative solution for a direct combustion fuel.

Moreover, to overcome the problem of storage of hydrogen, cells in which the hydrogen is produced gradually as required by steam-reforming of methanol, have also been developed. The advantages of the steam-reforming of methanol into hydrogen are:

- a low conversion temperature (about 250 to 300°C),
- a high hydrogen/carbon mole ratio (4:1) in methanol,
- no C-C bond (unlike hydrocarbons such as gasoline, naphtha, kerosene or diesel) and thus less risk of soot or of carbon,
- a selective process (less formation of CO compared with hydrocarbons such as gasoline, naphtha, kerosene or diesel),
- no sulfur in the fuel (unlike hydrocarbons such as gasoline, naphtha , kerosene or diesel), sulfur being a known catalyst poison.

However, besides the toxicity problem described previously, methanol has the drawback of having a low energy density and the vapour-reforming process is slow.

The Applicant has recently discovered that it is possible to use novel fuels for a Fuel Cell, functioning on the same principle as DMFC but not having the drawbacks of methanol and discovered in addition that certain novel fuels can advantageously replace methanol as a source of hydrogen by steam reforming in hydrogen Fuel Cells. A patent application PCT/FR 2006/000283 ('283) (published on Aug 17, 2006, number WO 2006/084993) has thus been filed on Feb 8, 2006.

According to ' 283 the fuel is used within an aqueous medium i.e. a medium containing water and optionally a $C_1$ to $C_4$ monoalcohol. This fuel is in particular at least partially soluble in water, especially for its use in cells of acid DMFC type. The fuel is an organic compound comprising carbon, hydrogen and oxygen atoms, and possibly at least one other heteroatom such as nitrogen, and combinations thereof.

The fuels described into ' 283 present interesting physicochemical properties such as a high boiling point and a low vapour pressure, a high flash point, a low "crossover", a good solubility (at least partial) in water when it is a water-fuel mixture that feeds the anode, a high energy density, this term meaning the number of exchangeable electrons per ml of fuel and advantageously a low toxicity.

These fuels are chosen among the following:

➢ The acetals and ethers of polyacetals having the general formula: $R^1-(OCH_2)_n-OR^{1'}$, in which $R^1$ and $R^{1'}$ identical or different, represent alkyl radical and n is an index with a value of between 1 and 8 will be for instance DMM, $CH_3-(OCH_2)_2-OCH_3$, $CH_3-(OCH_2)_3-OCH_3$, $CH_3-(OCH_2)_4-OCH_3$, $CH_3-(OCH_2)-OC_2H_5$. These ethers are referred to by the abbreviation POM for polyoxymethylene, to which will be added one or two letters (POMXX) for identifying the alkyl radicals $R^1$ and $R^{1'}$.

As regards the reaction mechanism in the cell functioning in acidic medium, it may be summarized by the following half-cell equations for a $POMM_n$, i.e. at the anode in the case of acidic cells:

$$CH_3\text{-}(OCH_2)_n\text{-}OCH_3 + (n+3)H_2O \rightarrow (n+2)CO_2 + (4n+12)H^+ + (4n+12)e^-$$

and at the cathode:

$$(4n+12)H^+ + (4n+12)e^- + (n+3)O_2 \rightarrow (2n+6) H_2O.$$

In addition '283 describes the use of said fuels within the indirect fuel cells comprising a steam reforming step for which $POMM_n$ represent an advantageous alternative in terms of storage of hydrogen in the form commonly referred to as a "liquid hydride".

> According to '283 the Ureas and Amides such as urea, methylurea, N,N'-dimethylurea, N-ethylacetamide and N,N-dimethylacetamide, and a mixture thereof can also be used as fuel for Fuel Cell.
> According to '283 the oxalates and carbonates having the general formula $R\text{-}O\text{-}(CO)_n\text{-}OR'$, can also be used as fuel for Fuel Cell. By way of example mention is made in this class of fuels of dimethyl carbonate (DMC) and diethyl oxalate (DEO).

However the problem encountered with the use as fuel for Fuel Cell of some of these compounds is due to their rather high stability at low temperature which involves a difficult and slow oxidation on contact with the catalytic anode at the operating temperature conditions. Consequently, the efficiency of some of these fuels seems to be lower than with the methanol.

Description of the invention:

The applicant has discovered it is possible to overcome this obstacle in applying an hydrolysing step to the oxy-carbon fuel before introducing it in the anodic zone of the Fuel Cell.

The invention is directed to a Fuel Cell, supplied with fuel from a fuel cartridge, comprising in addition to its usual components an hydrolysing zone placed upstream of the anode

The invention is directed to a Fuel Cell comprising a leak-tight container (A) containing an anode and a cathode in contact with an electrolysable liquid medium, current collectors connected, respectively, on the one hand to the anode and to the cathode, and on the other hand to an electrical circuit (4), using as liquid medium an aqueous medium containing an oxy-carbon fuel that is at least partially soluble in the aqueous medium at the temperature of use of the cell, characterized in that a hydrolyser (10) containing an acidic catalyst being able to hydrolyse the aqueous medium is implemented between the fuel cartridge and the anode.

According to one embodiment of the invention the hydrolyser (10) is located into the Fuel cell as a film layer on top of the anode, within the diffusion layer.

According to another embodiment of the invention the hydrolyser (10) is located between the fuel cartridge and the fuel inlet of the Fuel Cell.

According to another embodiment of the invention a valve is implemented between the fuel cartridge and the Hydrolyser (10).

The other characteristics and advantages of the invention will emerge more clearly on reading the detailed description of the Fuel Cells and their operating modes that follows, which is given as a non-limiting illustration with reference to the attached figures in which:

- Figure 1 is a schematic view in longitudinal cross section of a fuel cell according to the prior art;
- Figure 2 is a schematic view in longitudinal cross section of a fuel cell according to a first embodiment the invention;
- Figure 3 is a schematic view in longitudinal cross section of a fuel cell according to a second embodiment of the invention;
- Figure 4 is a schematic view in longitudinal cross section of a fuel cell according to a third embodiment of the invention;
- Figure 5 is a schematic explosive view of an analytical fuel cell named channel fuel cell enabling to measure the main electrochemical characteristics of the reaction taking place within a fuel cell .
- Figures 6 to 12 are curves of the current intensity (mA) as a function of cell voltage (E in volts), of current intensity as a function of the temperature and the cell voltage, of the activation energy as a function of the cell voltage and the rate of decomposition of fuels in acidic media at various temperature.

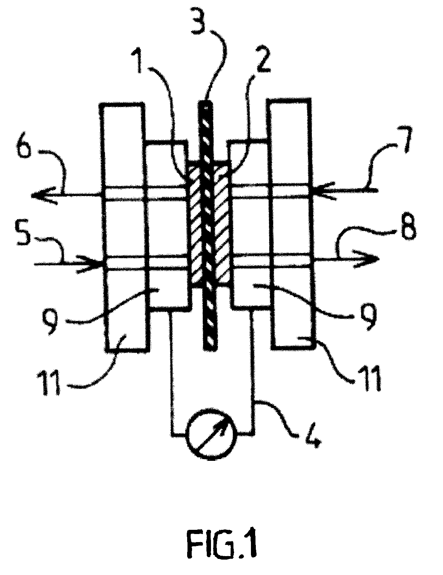

With reference to Figure 1, the Fuel Cell according to the prior art comprises a leak-tight container (A) containing a catalytic anode (1) in contact with an electrolysable liquid medium, introduced by line (5), and a catalytic cathode (2) and separated from the anode by an electrolytic membrane (3). Current collectors (9) are connected, respectively, to the anode (1) and to the cathode (2), on the one hand, and to an external electrical circuit (4), on the other hand, to allow the current to circulate in the circuit (4). The carbon dioxide produced in the cell is extracted from the circulation compartment via the line (6). Oxygen is introduced via the line (7) and the water produced is extracted via the line (8). Calendars (11) hold the assembly in position in the container (A).

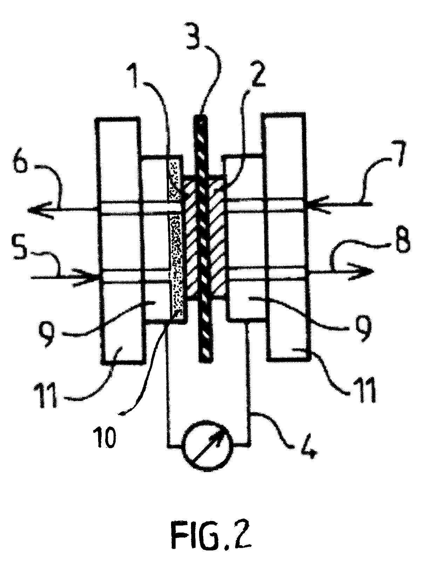

With reference to Figure 2, the Fuel Cell according to the invention is similar to the Fuel Cell of Figure 1 with in addition a Hydrolyser (10) inserted as a film layer between the anode (1) and the current collectors (9).

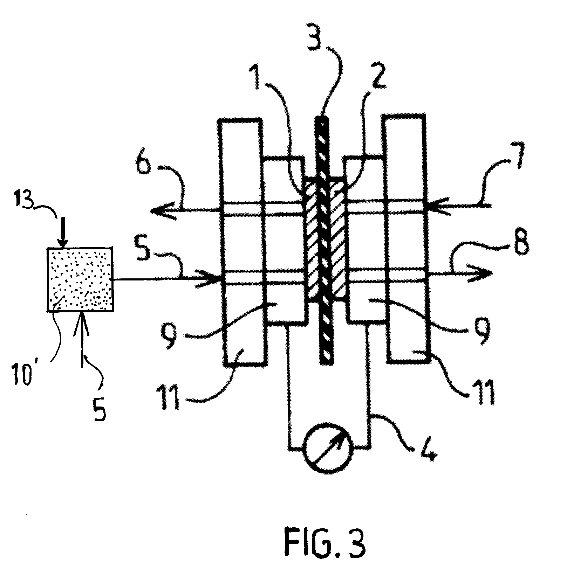

With reference to Figure 3, the Fuel Cell according to the invention is similar to the Fuel Cell of Figure 1 with in addition a Hydrolyser (10') consisting of a reactor implemented on line (5) near the calendars (11), said line (5) supplying the electrolysable liquid medium containing the fuel to the Fuel Cell. An heating device (13) may be implemented onto the Hydrolyser (10').

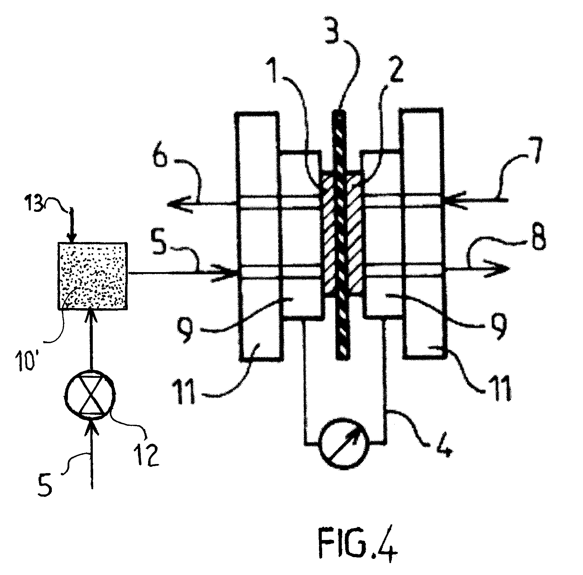

With reference to Figure 4, the Fuel Cell according to the invention is similar to the Fuel Cell of Figure 3 with in addition a shut off valve (12) implemented on line (5) between the fuel cartridge (unrepresented) and the Hydrolyser (10'). This valve aims at avoiding the fuel hydrolysis reaction to occur when the fuel cell is not running, i.e. the valve is opened when the fuel cell is on operation and it is closed when the fuel cell is not running. An heating device (13) may be implemented onto the Hydrolyser (10').

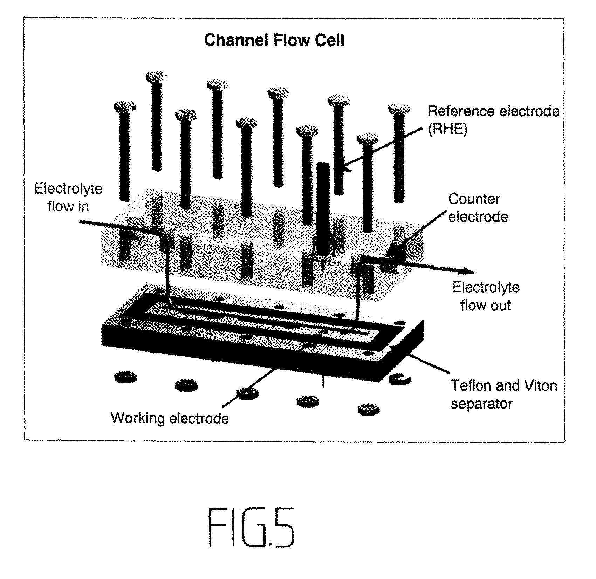

With reference to Figure 5 the channel fuel cell comprises an inlet (1) for electrolyte solution, a channel (2) for circulating the solution in contact with the electrodes, working electrode (3) and counter electrode (4), a reference electrode RHE (5), an outlet (6) for flowing out the solution, calendars (7) and (8) combined with assembling means (9) and a separator (10) isolating the channel containing the solution.

The fuel cell according to the present invention has been conceived for working according to the acid mode. However it is easy to adapt the fuel cell design to operate according alkaline mode. In that case a Hydrolyser is implemented outside the actual fuel cell and provides the hydrolysed fuel to the circulation compartment of the alkaline fuel cell.

One skilled in the art knows that hydrolysis reactions are catalysed by acid catalysts. The Hydrolyser contains solid catalytic acid compounds, preferably constituted in form of particles. The acidity of said compounds is defined as a Hammett acidity as referenced in the article of K. Tanabe et al in "Studies in Surface Science and Catalysis", Vol 51, 1989, chap 1 et 2. The catalysts have to have a Hammett acidity less than +2 and preferably less than -3. These catalysts correspond for example to natural or synthetic silicon materials such as mordenite, montmorillonite, acidic zeolites; supports such as silicon oxides, alumina ($Al_2O_3$), or titanium oxide ($TiO_2$) coated by inorganic, mono, di ou triacids; mixed oxides such as $\gamma$-alumina, mixed oxide $ZnO$-$Al_2O_3$, or in addition heteropolyacids.

The catalysts are preferably selected from zeolites, Nafion® compounds (based on sulfonic acid of fluorinated polymers), chlorinated alumina, acids and salts of heteropolyacids such as phosphotungstic, phosphomolybdic, molybdosilicic, phosphomolybdotungstic acids, and/or silicotungstic acids and various solid metallic oxides materials such as tantalum oxide $Ta_2O_5$, niobium oxide $Nb_2O_5$, alumina $Al_2O_3$, titanium oxide $TiO_2$, zirconium oxide $ZrO_2$, tin oxide $SnO_2$, silica $SiO_2$ or aluminosilicate $SiO_2$-$Al_2O_3$, impregnated by acidic functions such as borate $BO_3$, sulphate $SO_4$, tungstate $WO_3$, phosphate $PO_4$, silicate ($SiO_3$ or $SiO_4$), or molybdate $MoO_3$. According to the literature, all these catalysts have a Hammett acidity $H_0$ less than +2.

The catalysts are most preferably selected from acidic resins, such as Amberlyst® type (from Rohm and Haas), Nafion® and silica doped Nafion®, sulfonated active carbon, sulfonated carbon nanotubes.

These catalysts can be strong acidic resins deposited on carbon powder, paper or fibers (for example sulfonated polymers used for fuel cell systems) or surface modified carbon powder with acidic groups or acidic oxide particles fixed in porous film or filled in vessel.

The hydrolysis having to be carried out in a flowing solution, it is important to maximize the contact surface between the acidic material and the aqueous medium in order to optimise the conversion rate of the fuel. To achieve this objective the catalyst contained into the Hydrolyser will constitute a porous structure and the acidic materials are stacked together in order to obtain a compact porous and high surface area structure, enabling the fuel circulation and fast hydrolysis.

It is well known that the hydrolysis reaction is activated by the temperature. However, the temperature of a fuel cell during its working period is not constant, with notably a cold start i.e. ambient temperature. Generally hydrolysis of the fuel of the aqueous medium will be conducted between 20 and 100 °C depending essentially on the type of fuel used. For this reason, it is interesting to be able to set up a heating system around the hydrolyser. The Fuel Cells according to figures 3 and 4 having the acidic hydrolyser out of the fuel cell, it is easy to implement an additional device (13), in order to obtain a controlled temperature during the working period of the fuel cell for example.

The other elements of the Fuel Cells are the usual ones for this kind of applications.

The anode is made of a metallic material containing platinum. Advantageously, the anode is made of a metallic material containing platinum and at least one metal chosen from ruthenium, tin, nickel, molybdenum and antimony. According to one particular mode of the invention, the anode is made either of platinum on carbon for instance the commercial catalytic anode E-TEK, consisting of Pt/C, 40% by mass of Pt and 2 mg.cm$^{-2}$ of Pt, or of a mixture of platinum and ruthenium on carbon PtRu (50:50)/C, 60% by mass of Pt/Ru and 2 mg.cm$^{-2}$ of PtRu with a 1:1 atomic ratio.

The cathode is constituted from the metallic materials used for anode with possibly different contents in metallic constituents for instance a commercial catalytic cathode E-TEK, consisting of 40% by weight of Pt/C and 2 mg.cm$^{-2}$ of platinum catalyst.

The Fuel Cell comprises in addition an electrolytic membrane separating the anode from the cathode. This membrane is generally of polymeric nature but may be in certain cases of mineral nature. For instance the electrolytic membrane is a solid conductive polymer of Nafion® 117 type.

This ensemble anode/membrane/cathode is usually named MEA.

The line (5) for feeding the anodic zone (1) with fuel and with water and the line (7) for feeding the cathodic zone (2) with oxygen, are provided with means for measuring the flow rates and for adapting the temperature and pressure of the different reagents.

The oxy-carbon fuel used in the Fuel Cells of the invention is a compound containing carbon, hydrogen and oxygen and optionally a heteroatom such as nitrogen. This fuel is generally chosen among acetals, polyacetals, carbonates, oxalates, ureas and amides, and mixtures thereof. Advantageously, the fuel is an organic compound comprising not more than 4 carbon-carbon bonds and especially from 0 to 3 carbon-carbon bonds, and most prederably no C-C bonds. C-C bonds have the drawback of being difficult to break at low temperature (working temperature).

According to one particular embodiment of the invention, the liquid fuel for the fuel cell is an acetal or a polyacetal having the general formula: $R^1$-$(OCH_2)_n$-$OR^{1'}$ in which $R^1$ and $R^{1'}$, which may be identical or different, represent a linear or branched alkyl radical containing from 1 to 5 carbon atoms and n is an index with a value of between 0 and 8. When n=0, the product is called a dialkylether.

The constituents of the fuel will have for instance the following formula: $CH_3$-O-$CH_3$ (dimethylether with n=0), $CH_3$O-$CH_2$-$OCH_3$ (methylal or dimethoxymethane or DMM wjth n=1), $CH_3$-$(OCH_2)_2$-$OCH_3$, $CH_3$-$(OCH_2)_3$-$OCH_3$, $CH_3$-$(OCH_2)_4$-$OCH_3$, $CH_3$-$(OCH_2)$-$OC_2H_5$, etc..., mixtures thereof and the compound having the formula $(CH_3O)_3$-CH (trimethoxymethane or TMM).

These fuels are polyoxymethylene dialkyl ethers, which will be referred to herein-below by the abbreviation POM for polyoxymethylene, to which will be added one or two letters (POMXX) for identifying the alkyl radicals $R^1$ and $R^{1'}$, M for methyl, E for ethyl, P or i-P for (iso)propyl, B for butyl, Pe for pentyl and H for hexyl, and also an index corresponding to the number n of units $(CH_2O)$ (POMXX$_n$).

These products are named, for example:

- POMM$_n$ (polyoxymethylene dimethyl ether) when the alkyl is a methyl group, $CH_3$-$(OCH_2)_n$-$OCH_3$,
- POME (polyoxymethylene diethyl ether) when the alkyl is an ethyl group,
- POMP (polyoxymethylene dipropyl ether) when the alkyl is a propyl group,
- POMB (polyoxymethylene dibutyl ether) when the alkyl is a butyl group.

The compound with n oxymethylene units will be known as POMM$_n$. Thus, methylal (n=1), would be known as POMM$_1$, and butylal will be known as POMB$_1$. If a mixture of products derived from the same synthesis is used, POMM$_{3-8}$ will refer, for example, to a mixture containing POMM$_n$ of n = 3 to 8.

These POMXX are dissymmetric when $R^1 \neq R^{1'}$. It will be possible, for example, to have a POMME$_2$ that will denote a polyoxymethylene methyl ethyl ether with two $(CH_2O)$ units, i.e. $CH_3$-$(OCH_2)_2$-$OC_2H_5$.

Advantageously, the fuel is an acetal or a polyacetal ether of symmetrical chemical structure.

Although it may be envisaged to use this fuel in pure form, in practice, on account of the modes of synthesis used and for economic reasons, mixtures of POMXX differentiated especially by the number of $(CH_2O)$ units will be used.

The advantages of POMXX are quite probably associated with their chemical nature. The reason for this is that, by means of the mode of synthesis, it is possible to control the chain length. In general, the boiling point of POMXX increases with the number of -$(CH_2O)$ units and with the length of the alkyl chain. On the other hand, the solubility in water decreases with the length of the $(-CH_2O-)_n$ chain and with the length of the alkyl chains. An optimisation may thus be made as a function of the desired final application for the fuel cell.

POMXX may be used at lower molar concentrations than with methanol, which makes it possible to limit the losses by evaporation and by permeation. Moreover, twice as much water is manufactured at the cathode than that which is required at the anode, which may allow the implementation of a cell fed with a pure fuel diluted by recycling the water produced at the cathode.

Compared with other usual methanol substitutes, POMM have the advantage of having a structure consisting of units containing 1 carbon atom (equivalent to methanol + formaldehyde). There are thus no C-C bonds that are difficult to break at low temperature. These are therefore products that are readily hydrolysable by acidic catalysis, and that may thus be broken down into fragments of a carbon atom (oxymethylene or methoxy), which are thus readily oxidized by the catalyst present at the anode.

In the series of POME, POMP or POMB, there are nevertheless C-C bonds due to the alkyl groups. However, it is in accordance with the principle of the reaction mechanisms that the molecule in POM form and not in alcohol form should make it possible, via activation of the bonds during hydrolysis, to obtain higher reactivity.

The Fuel Cell according to the invention can be used as a direct fuel cell operating as a DMFC, if the cell is operated at an elevated temperature achievable a sufficient decomposition of original fuels to methanol + formaldehyde in the hydrolyser.

The same Fuel Cell may be used as an indirect fuel cell provided that a steam reforming reactor producing hydrogen is implemented between the hydrolyser and the anode.

The Fuel Cell of the invention can use as fuel amides or urea compounds of formula :

$$R^2-(NH)x\ CO-N(R^{2'})R^{2''},$$

in which $R^2$, $R^{2'}$ and $R^{2''}$ independently represent a hydrogen atom or an alkyl radical containing in particular from 1 to 8 carbon atoms, for example from 1 to 3 carbon atoms. x can be 0 or 1. Examples of such compounds are urea, methylurea, N,N'-dimethylurea, N-ethylacetamide and N,N-dimethylacetamide and a mixture thereof.

The Fuel Cell of the invention can also use as fuel oxalates and carbonates having the general formula $R^3$-O-(CO) n-O$R^{3'}$, in which $R^3$ and $R^{3'}$ independently represent an alkyl radical in particular containing from 1 to 8 carbon atoms, for example from 1 to 3 carbon atoms, and in which n is an integer ranging from 1 to 4, for example from 1 to 2. By way of example, mention may be made in this class of fuels of dimethyl carbonate (DMC) and diethyl oxalate (DEO). With these fuels twice as much water is thus manufactured at the cathode than is needed at the anode. The advantages of DMC and DEO are on one hand their commercial availability and their low toxicity and the other hand their chemical nature. Compared with other usual methanol substitutes, DMC presents the advantage of consisting of units containing 1 carbon atom (methanol + O-CO-). In DEO there are still C-C bonds usually difficult to break at low temperature. However, said bonds can be easily hydrolysed to 1 C using acidic catalysts, and in addition it is known that oxalic acid and ethanol can be oxidized in a fuel cell.

The fuels used in the Fuel Cells according to the present invention will preferably present the following physicochemical properties:

- a high boiling point and a low vapour pressure, preferably a boiling point higher than - 24 °C ,
- a high flash point, preferably a flash point above 0 °C
- a low "crossover", due to the steric hindrance effect,
- solubility (at least partial) in water when it is a water-fuel mixture that feeds the hydrolyser and further the anode,
- an energy density higher than that of methanol. The term "energy density" means the number of exchangeable electrons per ml of fuel, preferably more than 0.15 moles of electrons per ml of fuel.
- a low viscosity, enabling them to be pumped by a microfluid system, for example ranging from 0.3 to 4 cP, measured at 25°C.

The reactions taking place within the hydrolyser according to the nature of used fuel are the following.

$$CH_3-OCH_2-OCH_3 + H_2O \rightarrow 2\ CH_3OH + HCHO\ (DMM)$$

$$CH_3-(OCH_2)_2-OCH_3 + H_2O \rightarrow 2\ CH_3OH + 2\ HCHO\ POMM_2)$$

$$CH_3-(OCH_2)_3-OCH_3 + H_2O \rightarrow 2\ CH_3OH + 3\ HCHO\ (POMM_3)$$

This behaviour can be generalized both to the case of $POMM_n$ fuels and to the other oxycarbon fuels according to the following hydrolysis reaction equations:

$$CH_3-(OCH_2)_n-OCH_3 + H_2O \rightarrow 2\ CH_3OH + n\ HCHO\ (POMM_n)$$

$$CH_3-O-CH_3 + H_2O \rightarrow 2\ CH_3OH\ (DME)$$

$$(CH_3O)_3\ CH + 2H_2O \rightarrow 3\ CH_3OH + HCOOH\ (TMM)$$

$$H_2N-CO-NH_2 + H_2O \rightarrow 2NH_3 + CO_2\ (Urea)$$

$$C_2H_5OOC-COOC_2H_5 + 2H_2O \rightarrow 2C_2H_5OH + HOOC-COOH\ (Oxalate)$$

$$CH_3-O-CO-OCH_3 + H_2O \rightarrow 2\ CH_3OH + CO_2\ (Carbonate)$$

The hydrolysis of the here-above compounds constituting the fuel of the aqueous medium conducts to the fuel decomposition to simpler small molecules which are very efficient in the fuel cell. Considering the series of $POMM_n$ the hydrolysis leads to a mixture of methanol and formaldehyde, the quantity of formaldehyde in the mixture depending on the number of oxymethylene units. For example, the resulting products such as methanol, formaldehyde, formic acid or ethanol, acetaldehyde, acetic acid, are able to react much easily than the original fuels, resulting in better fuel cell performance or lowering the reforming temperature with improved system efficiency, since simpler molecules are more easily oxidized on a fuel cell anode. The Fuel Cell according to the present invention is particularly efficient in using as fuel the compounds of the series of $POMM_n$.

EXAMPLES:

Examples of oxy-carbon compounds and particularly polyoxymethylene dialkyl ethers included in the composition of the fuels used within the fuel cells according to the invention are given in Table 1 below with their physical characteristics.

Table 1

| Molecule | boiling point °C | Density | Flash point °C | Solubility in water % at 20°C | Molar mass $g.mol^{-1}$ | Dynamic viscosity (cP) |
|---|---|---|---|---|---|---|
| $CH_3$-$(OCH_2)_2$-$OCH_3$ dioxymethylene dimethyl ether | 105 | 0.9597 | 14 | 31 | 106 | |
| $CH_3$-$(OCH_2)_3$-$OCH_3$ trioxymethylene dimethyl ether | 156 | 1.0242 | | 28 | 136 | |
| $CH_3$-$(OCH_2)_4$-$OCH_3$ tetraoxymethylene dimethyl ether | 202 | 1.0671 | | | 166 | |
| $C_2H_5$-$(OCH_2)$-O $C_2H_5$ oxymethylene diethyl ether | 88 | 0.83 | -5 | 6.33 | 104 | 0.42 to 25°C |
| $C_2H_5$-$(OCH_2)_2$-O $C_2H_5$ dioxymethylene diethyl ether | 140 | 0.91 | 33 | 4 | 134 | |
| $C_2H_5$-$(OCH_2)_3$-O $C_2H_5$ trioxymethylene diethyl ether | 185 | 0.97 | | 4.5 | 164 | |
| i-$C_3H_7$-$(OCH_2)$-O i-$C_3H_7$ oxymethylene diisopropyl ether | 117-119 | 0.8156 | | 1.48 | 132 | |
| n-$C_4H_9$-$(OCH_2)$-O n-$C_4H_9$ oxymethylene dibutyl ether | 180 | 0.8354 | 60 | insoluble | 160 | |
| $CH_3OH$ Methanol | 65 | 0.791 | 12 | total | 32 | 0.54 to 25°C |
| $CH_3$-$(OCH_2)$-$OCH_3$ methylal, DMM or oxymethylene dimethyl ether | 42 | 0.86 | - 18 | 32.3 | 76 | 0.34 to 25°C |

(continued)

| Molecule | boiling point °C | Density | Flash point °C | Solubility in water % at 20°C | Molar mass g.mol$^{-1}$ | Dynamic viscosity (cP) |
|---|---|---|---|---|---|---|
| CH-(OCH$_3$)$_3$ trioxymethylene methane, TMM | 114.5 | 1.1765 | | | 90 | |
| CH$_3$-(OCH$_2$)-O C$_2$H$_5$ | 67 | 0.83 | | | 90 | 0.42 to 25 °C |
| 3-8 POMM mixture | 153-268 | 1.068 | 64-84 | 9.3 | 155.8 | 1.30 to 40°C |
| CH$_3$-O-CH$_3$ dimethylether | -24 | | | | 46 | |

Examples 1- 4

In order to establish the advantages of an initial hydrolysing step of the fuel before introducing it in the fuel cell, a set of comparative tests have been conducted within a standard Channel Flow Cell which allow to obtain all the possible data (current intensity (i); potential (E) by reference to the Reference electrode (RHE); activation energy $E_a$ ) relating to voltametric behavior of the different fuels to be used in the fuel cell in the course of the electrooxidation of said fuel solutions. Of course these tests were carried out in view of a fuel cell functioning according the acid mode. The experimental conditions of these tests were the following:

A three electrodes configuration (including RHE) was used for the channel flow cell illustrated by fig. 5.

The working electrodes were constituted by commercial catalysts PtRu (1:1) 50 wt % /C. The commercial catalysts dispersed on carbon black investigated: PtRu 1:1 (atomic ratio)/C. The electrodes were prepared by deposition of an ink containing the catalyst nanoparticles dispersed onto carbon on a 0.04 cm$^2$ gold electrode. The catalyst loading on the experimentally used electrode was 5.5 $\mu$g.cm$^{-2}$ PtRu 1:1 (i.e. 11 $\mu$g.cm$^{-2}$ 50 wt% PtRu/C).

On electrodes, a Nafion® film was deposited (0.1 $\mu$m thickness).The electrolytes solutions used for oxidation measurements were :

0.1 M HClO$_4$ + 1 M CH$_3$OH (methanol oxidation; Ex. 1)
0.1 M HClO$_4$ + 1 M H$_2$CO (formaldehyde oxidation; Ex. 2)
0.1 M HClO$_4$ + 0.3 M POMM$_2$ (POMM$_2$ oxidation; Ex. 3)
0.1 M HClO$_4$ + 0.3 M hydrolysed POMM$_2$ (hydrolysed POMM$_2$ oxidation; Ex. 4)

The hydrolysed POMM$_2$ is obtained from 0.3 M POMM$_2$ aqueous solution fed into a reactor containing a solid acidic resin Amberlyst 15, with a contact time of 60 minutes and operated at 60 °C. The POMM$_2$ was converted to methanol and formaldehyde through hydrolysis leading to an aqueous solution containing 0.59 moles/l of formaldehyde and 0.58 moles/l of methanol, and traces of unconverted POMM$_1$.

The same treatment has been applied to the fuels of examples 1 and 2 which were then submitted to the same electro oxidizing tests (Ex. 1' and 2').

The solutions were deaerated with nitrogen. The temperature range for the measurements was 30°C to 90°C and the measurements were carried out without electrolyte flow. The scan rate for fuels oxidation measurements was set at 5 mV s$^{-1}$.

The flow cell was used with a three electrodes configuration and the electrochemical measurements were performed separately on each electrode (i.e. not simultaneously).

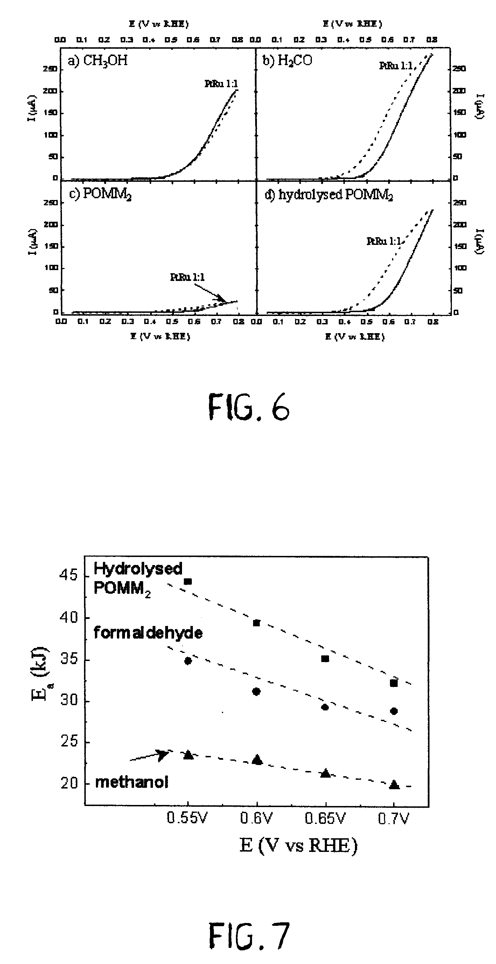

The catalytic activity of PtRu electrodes was investigated with the four solutions of examples 1-4. The voltamograms recorded during the oxidation for both electrodes at 30°C are presented in Figure 6 . with 1 M MeOH (a), 1 M H$_2$CO (b), 0.3 M POMM$_2$ (c) and hydrolysed POMM$_2$ (d). Both positive-going (solid curve) and negative-going scan (dotted curve) are presented.

The first observation made from these voltamograms is that PtRu catalyst present a very low activity for the POMM$_2$ fuel oxidation compared to other fuels.

A comparison between the curves c) and d) corresponding to examples 3 and 4 shows a substantial increase of current intensity as a function of voltage for the hydrolysed POMM$_2$. The hydrolysed POMM$_2$ has a voltametric behavior similar to that of methanol (ex. 1) and formaldehyde (ex. 2), the current intensity obtained being intermediary between them. The results obtained with the hydrolysed fuels of examples 1' and 2' (unrepresented) do not show any change as compared to the results obtained with methanol and formaldehyde.

In order to compare the oxidation of the hydrolysed $POMM_2$ solution with the oxidation of methanol and formaldehyde, the activation energy of these three oxidation reactions was calculated according to the Arrhenius equation:

$$i = I_0 e^{-\frac{E_a}{RT}}$$ where i is the oxidation current and $I_0$ is the pre-exponential factor. The activation energy obtained at 0.6 V vs RHE and 0.7 V vs RHE are presented on Table 2, and the graphical evolution of the activation energy as a function of the oxidation potential is plotted on Figure 7.

Table 2

|  | PtRu 1:1 0.6VvsRHE | PtRu 1:1 0.7VvsRHE |
| --- | --- | --- |
| Hydrolysed $POMM_2$ | 39.4 kJ | 32.3 kJ |
| $H_2CO$ | 31.2 kJ | 28.9 kJ |
| $CH_3OH$ | 22.9 kJ | 20.0 kJ |

Activation energy calculated at 0.6 V vs RHE and 0.7 V vs RHE for hydrolysed $POMM_2$, formaldehyde and methanol oxidation reaction on PtRu 1:1 catalysts.

Figure 7 shows that the activation energy for the hydrolysed $POMM_2$ solution (a methanol and formaldehyde mix) presents an evolution similar to that of the formaldehyde solution. Indeed, the mixed methanol + formaldehyde solution implies a concurrent reaction between methanol and formaldehyde on the catalytic surface and the general observation of Figures 6 and 7 suggests that formaldehyde is the major reactant during the oxidation of hydrolysed $POMM_2$ solution.

Example 5

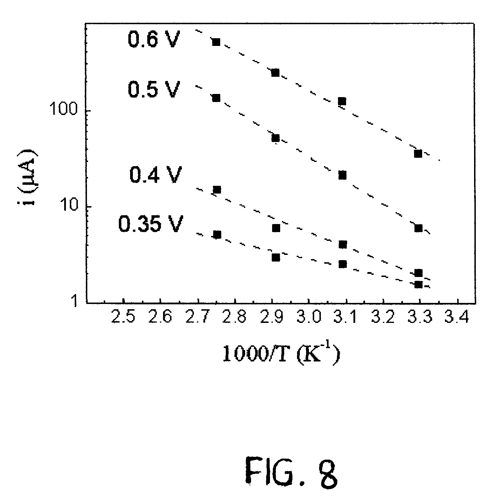

In this example the influence of the temperature conditions on the electrooxidation process of the fuel of example 4 has been studied. The electrooxidation of hydrolysed $POMM_2$ was conducted at different temperatures : 30, 50, 70 and 90 °C. The results obtained made it possible to determine of the current density ($10^{-6}$.A) as a function of the temperature expressed as 1000/T, T being expressed in Kelvin and that at different levels of voltage (0.35, 0.4, 0.5 and 0.6 V). The results are given in figure 8. It appears the temperature increase leads to an increase of the current intensity which involves an increase of the reaction rate.

Examples 6-9

The influence of the fuel hydrolysis conditions on the operating performance of the fuel cell being clearly stated a study of the influence of hydrolysing temperature and of the acidity of the medium without the use of any solid acidic catalyst, was conducted both on $POMM_2$ and on $POMM_3$.

In examples 6 and 7 the influence of the temperature on $POMM_2$ and on $POMM_3$ hydrolysis in an aqueous solution containing 0.1 M $HClO_4$ and respectively 0.3 M of $POMM_2$ and 0.25 M of $POMM_3$ has been studied.

In examples 8 and 9 the same study is conducted with solutions containing respectively 0.3 M of $POMM_2$ and 0.25 M of $POMM_3$ and 1 M $HClO_4$.

In the present fuel cell, the aqueous solution of POMMn fuel is supplied to the anode consisting of an ionomer (typically Nafion) and catalysts and in order to examine the effect of pH (or acid concentration) on the stability of fuels, 0.1 M and 1 M $HClO_4$ solutions were used. The $POMM_2$ and $POMM_3$ solutions in $HClO_4$ were prepared from reagent grade chemicals or chemicals provided by Arkema and Milli-Q water. An ion-exchange column (Ionpak KC-811, Shodex) was used for High Performance Liquid Chromatography (HPLC) measurements and the eluent was pure water with a flow rate of 0.5 ml $min^{-1}$.

The volume of the acidic solutions containing the fuel was 3 ml and the hydrolysis was carried out at controlled temperature between 22°C (room temperature) and 90°C.

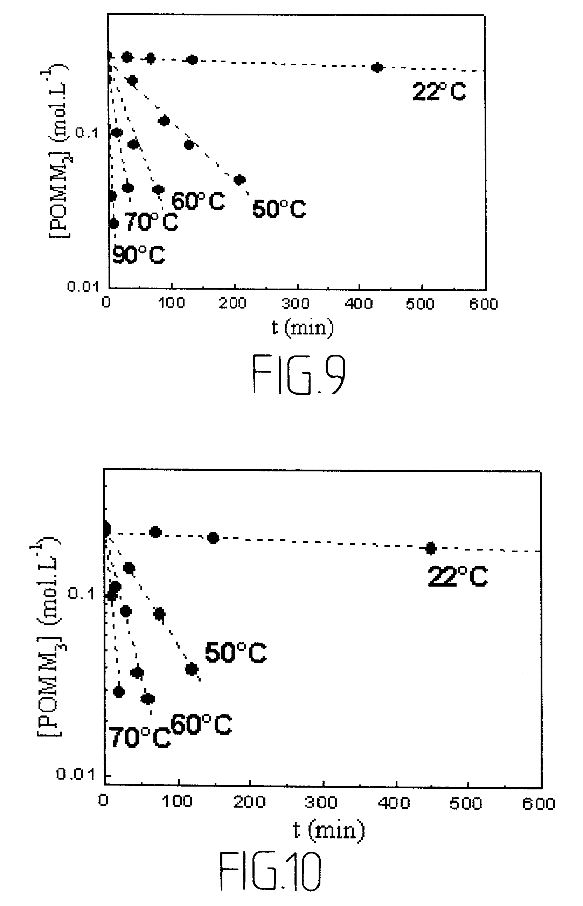

The results of examples 6 and 7 are given respectively in Figures 9 and 10 with the concentration of residual POMM expressed in $mol.l^{-1}$ as a function of the reaction time (in min) and that at temperature varying between 22 and 90 °C. At 22 °C no real hydrolysis takes place but the hydrolysis kinetic considerably increases with the temperature.

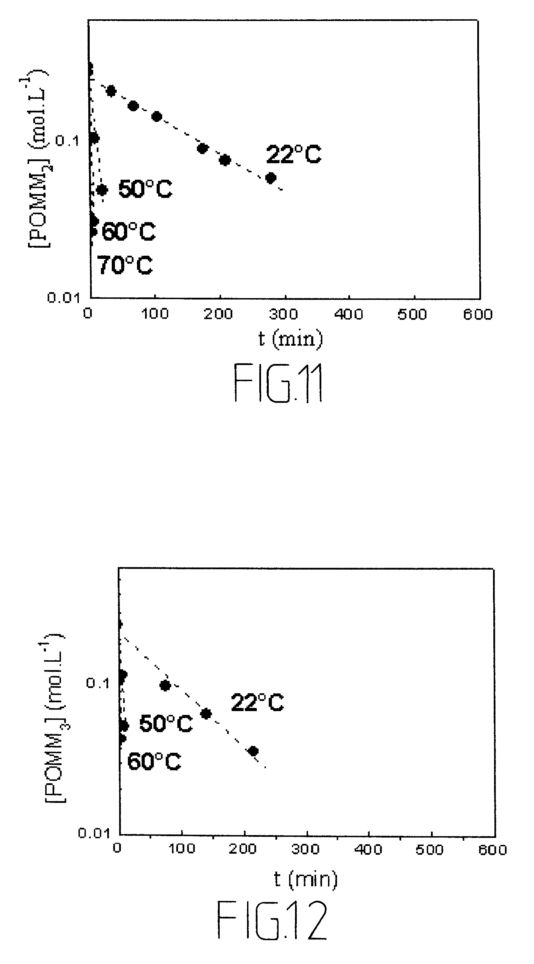

The same experiments conducted with a solution containing 1 M $HClO_4$ (examples 8 and 9) show (figures 11 and 12) that the acidity of the medium has an incidence on hydrolysis even at low temperature.

These concentrations (0.3 M $POMM_2$ and 0.25 M $POMM_3$) were selected relatively to a 1 M methanol solution: in order to have a constant number of electrons exchanged per electrolyte volume, the concentrations of other fuels were adapted depending on the number of electrons exchanged per molecule during the oxidation reaction.

The measurement of $POMM_n$ hydrolysis in pure water was carried out at ambient temperature (between 20°C and 22°C) with a 0.3 M $POMM_2$ solution in water and 0.25 M $POMM_3$ solution in water. In pure milli-Q water (comparartive example), the measurements revealed a total absence of degradation by hydrolysis after 75 days. This fact is very important for fuel storage at ambient temperature in aqueous medium.

Table 3 summarizes the data calculated for $POMM_n$ hydrolysis reaction. The kinetics constant is expressed at 22°C for a more accurate evaluation of the behaviour of $POMM_n$ in acidic medium. Indeed, the hydrolysis at 70-90°C is so fast that the accuracy of the kinetics constant determination is altered. From these data, it appears that the increase of $HClO_4$ concentration does not influence the activation energy of the reaction. On the other hand, the kinetics constant is increased by a factor 10 when the concentration of perchloric acid is increased of a factor 10. This behaviour coupled with the absence of hydrolysis in pure water shows that protons acts as a reactant in the hydrolysis reaction with a first order kinetics:

$$v = k\underbrace{[H_2O]^a}_{constant}[POMM_n] \Rightarrow v = k'\underbrace{[H_2O]^a}_{constant}[H^+][POMMn]$$

with v the reaction rate, k the apparent kinetics constant (with $k = k'[HClO_4]$)

Table 3

Kinetics constant measured at 22°C and activation energy for the hydrolysis reaction of $POMM_n$ fuels reported for different $HClO_4$ solutions.

| | $POMM_2$ k at 22 °C (mol$^{-1}$ l.min$^{-1}$) | k at 60°C (mol$^{-1}$ l.min$^{-1}$) | $E_a$ (kJ.mol$^{-1}$) | $POMM_3$ k at 22 °C (mol$^{-1}$ l.min$^{-1}$) | k at 60 °C (mol$^{-1}$ l.min$^{-1}$) | $E_a$ (kJ.mol$^{-1}$) |
|---|---|---|---|---|---|---|
| 0.1 M HCl $O_4$ | $5.49\ 10^{-6}$ | $4.5\ 10^{-4}$ | 87 | $6.71\ 10^{-6}$ | $6.66\ 10^{-4}$ | 99 |
| 1 M $HClO_4$ | $4.37\ 10^{-5}$ | $2.54\ 10^{-3}$ | 87 | $6.89\ 10^{-5}$ | $4.58\ 10^{-3}$ | 91 |

These results lead to the conclusion that in a fuel cell environment, the $POMM_n$ fuels hydrolysis may rapidly occur, especially considering that, after comparison between DMM, $POMM_2$ and $POMM_3$ hydrolysis, the higher is "n" (i.e. the bigger is the molecule), the fastest is the hydrolysis reaction rate.

**Claims**

1. Fuel cell comprising a leak-tight container (A) containing an anode (1) and a cathode (2) separated by an electrolytic membrane (3), in contact with an electrolysable liquid medium introduced by line (5), current collectors (9) connected, respectively, on the one hand to the anode and to the cathode, and on the other hand to an electrical circuit (4), the carbon dioxide produced being extracted by line (6), oxygen introduced by line (7) and water produced extracted by line(8) using as liquid medium an aqueous medium containing a fuel that is at least partially soluble in the aqueous medium, at the temperature of use of the cell **characterized in that** a Hydrolyser (10) containing an acidic catalyst being able to hydrolyse the aqueous medium is implemented between the fuel cartridge and the anode.

2. Fuel cell according to claim 1 **characterized in that** the acidic catalyst of Hydrolyser (10) is a solid acidic catalyst constituted in form of particles

3. Fuel cell according to claim 2 **characterized in that** the solid acidic catalyst is selected from acidic resins, acid polymers deposited on carbon powder, paper or fibers, surface modified carbon powder with acidic groups or acidic oxides.

4. Fuel cell according to one of preceding claims **characterized in that** the solid acidic catalyst is stacked in the Hydrolyser in order to obtain a compact porous and high surface area structure enabling the fuel circulation and fast hydrolysis.

5. Fuel cell according to one of preceding claims **characterized in that** the Hydrolyser (10) is located into the Fuel cell as a film layer on top of the anode.

6. Fuel cell according to either claims 1-4 **characterized in that** the Hydrolyser (10) is located between the fuel cartridge and the fuel inlet of the fuel cell.

7. Fuel cell according to claim 6 **characterized in that** the Hydrolyser (10) is provided with heating device (13).

8. Fuel cell according to one of the claims 6 and 7 **characterized in that** a valve is implemented between the fuel cartridge and the Hydrolyser (10).

9. Fuel cell according to one of preceding claims **characterized in that** the fuel of the liquid medium is an oxycarbon fuel and preferably a fuel containing compounds of the series named $POMM_n$.

FIG.1

FIG.2

FIG. 3

FIG.4

**Channel Flow Cell**

Reference electrode (RHE)

Electrolyte flow in

Counter electrode

Electrolyte flow out

Teflon and Viton separator

Working electrode

FIG.5

FIG. 6

FIG. 7

FIG. 8

FIG.9

FIG.10

FIG.11

FIG.12

European Patent Office

**EUROPEAN SEARCH REPORT**

Application Number

EP 07 10 8177

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | WO 2006/084993 A (ARKEMA FRANCE [FR]; DUBOIS JEAN-LUC [FR]) 17 August 2006 (2006-08-17) * page 4, line 33 - page 5, line 5 * * page 13, line 1 - page 14, line 9 * * claims 1-35 * * page 9, lines 30-34 * | 1-9 | INV. H01M8/04 H01M8/06 H01M8/08 H01M8/22 H01M8/10 |
| A | DE 103 24 201 A1 (AMT ANALYSENMESTECHNIK GMBH [DE]; ATI KUESTE GMBH [DE]; ENITECH ENERGI) 30 December 2004 (2004-12-30) * claim 5 * | 1-9 | |
| A | EP 1 249 883 A (RWE PILLER GMBH [DE]) 16 October 2002 (2002-10-16) * claims 1-30 * | 1-9 | |
| A | US 2005/008904 A1 (SUPPES GALEN J [US]) 13 January 2005 (2005-01-13) * claims 1-17 * | 1-9 | |
| A | TSUTSUMI Y ET AL: "DIRECT TYPE POLYMER ELECTROLYTE FUEL CELLS USING METHOXY FUEL" ELECTROCHEMISTRY, ELECTROCHEMISTRY SOCIETY OF JAPAN, TOKYO, JP, vol. 70, no. 20, December 2002 (2002-12), pages 984-987, XP009053891 * the whole document * | 1-9 | TECHNICAL FIELDS SEARCHED (IPC) H01M |

The present search report has been drawn up for all claims

| Place of search | Date of completion of the search | Examiner |
|---|---|---|
| The Hague | 4 October 2007 | Reich, Claus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 10 8177

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2007

| Patent document cited in search report | | Publication date | Patent family member(s) | | Publication date |
|---|---|---|---|---|---|
| WO 2006084993 | A | 17-08-2006 | FR | 2881750 A1 | 11-08-2006 |
| DE 10324201 | A1 | 30-12-2004 | NONE | | |
| EP 1249883 | A | 16-10-2002 | DE | 10118353 A1 | 24-10-2002 |
| | | | US | 2002149265 A1 | 17-10-2002 |
| US 2005008904 | A1 | 13-01-2005 | NONE | | |

EPO FORM P0459

For more details about this annex : see Official Journal of the European Patent Office, No. 12/82

## REFERENCES CITED IN THE DESCRIPTION

### Patent documents cited in the description

- US 6054228 A
- FR 2006000283 W
- WO 2006084993 A

### Non-patent literature cited in the description

- Other direct-alcohol fuel cells. **C. LAMY ; E.M. BELGSIR.** Handbook of Fuel Cells - Fundamentals, Technologies and Applications. John Wiley & Sons Ltd, 2003, vol. 1, 323-334
- **Y. TSUTSUMI et al.** *Electrochemistry,* 2002, vol. 70 (12), 984
- **JENS T. MÜLLER et al.** Electro-oxidation of Dimethyl Ether in a Polymer-Electrolyte-Membrane Fuel Cell. *Journal of The Electrochemical Society,* 2000, vol. 147 (11), 4058-4060
- **K. TANABE et al.** Studies in Surface Science and Catalysis. 1989, vol. 51